# EUROPÄISCHE PATENTANMELDUNG

(11) **EP 1 067 027 A2**
(43) Veröffentlichungstag der Anmeldung: **10.01.2001**
(21) Anmeldenummer: 00113187.9
(22) Anmeldetag: 03.07.2000
(51) Int. Cl.: B60R 21/20, B60R 13/02

(54) **Insassen-Schutzsystem für ein Fahrzeug**

(30) Priorität: 09.07.1999 DE 29912023 U
(71) Anmelder: TRW Occupant Restraint Systems GmbH & Co. KG, 73553 Alfdorf (DE)
(72) Erfinder: Brucker, Roland, 73529 Schwäbisch Gmünd (DE)
(74) Vertreter: Degwert, Hartmut, Dipl.-Phys.

(57) **Zusammenfassung**

Ein Insassen-Schutzsystem für ein Fahrzeug, dessen Karosserieaufbau innenseitig durch eine Auskleidung (22) abgedeckt ist, hat einen im Ruhezustand zusammengelegten aufblasbaren Gassack (18) und eine die Gassack-Packung zusammenhaltende Umhüllung (16). Die Auskleidung (22) ist mit einer Aussparung (24) versehen, an deren Berandung die freiliegende oder höchstens durch eine dekorative Abdeckfolie oder Abdeckbahn abgedeckte Umhüllung (16) der Gassack-Packung angeschmiegt ist. Die Umhüllung (16) ist durch Gestaltungsmerkmale augenfällig von der Auskleidung abgegrenzt.

## Beschreibung

Die Erfindung betrifft ein Insassen-Schutzsystem für ein Fahrzeug, dessen Karosserieaufbau innenseitig durch eine Auskleidung abgedeckt ist.

In zunehmendem Maße werden Fahrzeuge mit aufblasbaren Schutzkissen nicht nur im Frontbereich, sondern auch seitlich und insbesondere im Kopf- und Schulterbereich ausgestattet. Der im Ruhezustand zusammengelegte bzw. gefaltete Gassack bildet eine Gassack- Packung, die von einer Umhüllung umgeben unter der Auskleidung des Karosserieaufbaus verstaut ist. Man bemüht sich in der Regel, den verstauten Gassack hinter der Auskleidung so zu verbergen, daß er nicht sichtbar ist. Einerseits muß das als Abdeckung für den verstauten Gassack dienende Auskleidungsteil eine ausreichende mechanische Festigkeit aufweisen, damit es sich nicht vom Karosserieaufbau löst und einen Spalt freigibt, durch den die Gassack-Packung sichtbar und zugänglich wird, andererseits aber muß sie bei Aktivierung des Gassacks in kontrollierter Weise nachgeben und ausweichen, um die Entfaltung des Gassacks nicht zu behindern. Es erweist sich als schwierig und aufwendig, beide Forderungen gleichzeitig zu erfüllen.

Durch die Erfindung wird ein Insassen-Schutzsystem mit einem aufblasbaren Gassack geschaffen, das bei vermindertem Aufwand eine unbehinderte Entfaltung des Gassacks gewährleistet. Gemäß der Erfindung wird dies dadurch erreicht, daß die Auskleidung mit einer Aussparung versehen ist, an deren Berandung die freiliegende oder höchstens durch eine dekorative Abdeckfolie oder Abdeckbahn abgedeckte Umhüllung der Gassack-Packung angeschmiegt ist. Bei dem erfindungsgemäßen Insassen-Schutzsystem wird auf eine herkömmliche, durch ein Auskleidungsteil gebildete Abdeckung für die Gassack-Packung verzichtet. Dem liegt die Erkenntnis zugrunde, daß bei geeigneter Gestaltung die Wahrnehmung der Gassack-Packung bzw. der diese zusammenhaltenden Umhüllung, Abdeckfolie oder Abdeckbahn keineswegs unerwünscht sein muß und das resultierende Erscheinungsbild sogar als optisches Gestaltungselement gezielt eingesetzt werden kann. Eine vorteilhafte Ausführungsform der Erfindung besteht folglich darin, daß die Umhüllung der Gassack-Packung durch Gestaltungsmerkmale augenfällig von der Auskleidung abgegrenzt ist.

Die bei herkömmlichen Insassen-Schutzsystemen mit aufblasbarem Gassack als notwendig erachtete Abdeckung über der Gassack-Packung ist auch ein Schutz vor Beschädigung des Gassacks. Eines solchen Schutzes bedarf es aber nicht, wenn der Gassack an einer wenig exponierten Stelle verstaut wird, insbesondere im Dachbereich des Fahrzeugs. Bei der bevorzugten Ausführungsform der Erfindung ist daher die Gassack-Packung langgestreckt ausgebildet entlang einer Dachkante des Karosserieaufbaus zwischen dieser und einer Dachauskleidung angeordnet.

Weitere Vorteile und Merkmale der Erfindung ergeben sich aus der folgenden Beschreibung einer Ausführungsform der Erfindung unter Bezugnahme auf die Zeichnung. In der Zeichnung zeigen:
Figur 1 einen schematischen Schnitt im Bereich der Dachkante eines Karosserieaufbaus; und
Figur 2 eine schematische Perspektivansicht einer Dachverkleidung mit einem entlang einer Längsseite angeordneten Kopfschutz-Gassack.

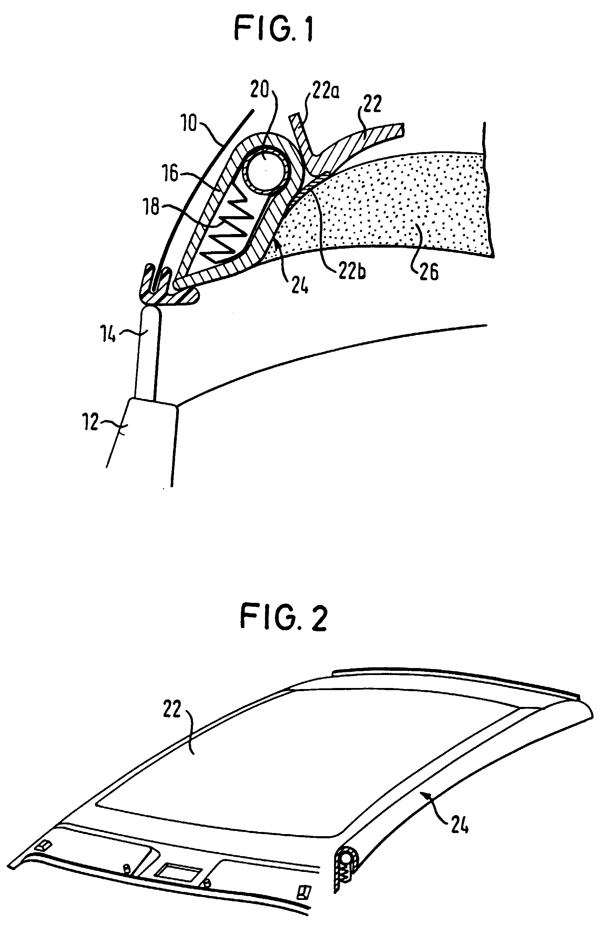

In Figur 1 ist von dem Karosserieaufbau eines Fahrzeugs eine Dachkante 10 mit einer Seitentür 12 und einem Seitenfenster 14 zu erkennen. Innenseitig entlang der Dachkante 10 ist ein Insassen-Schutzsystem mit einem aufblasbaren Gassack angeordnet. Dieses Insassen-Schutzsystem bildet ein vormontiertes Modul mit einer durch ein Profilteil gebildeten Umhüllung 16, einem darin gefaltet oder zusammengelegt aufgenommenen aufblasbaren Gassack 18 und einem Gaseinleitungsrohr 20, das am gekrümmten Boden der Umhüllung 16 angeordnet und dort abgestützt ist. Das Dach des Karosserieaufbaus ist innenseitig von einer Dachauskleidung 22 abgedeckt. Die Dachauskleidung 22 reicht jedoch nicht bis an die Dachkante heran, sondern bildet entlang der Dachkante eine Aussparung 24 zur Aufnahme der Gassack-Packung mit Umhüllung. Die Umhüllung 16 kann einen allgemein U-förmigen Schußkanal mit zwei parallelen, durch einen gekrümmten Boden verbundenen Schenkeln bilden. Die Gassack-Packung im Inneren der Umhüllung 16 kann durch eine Folie oder dergleichen zusammengehalten werden. Das in der Aussparung 24 angeordnete Gassack-Modul wird bei der bevorzugten Ausführungsform zwischen dem unteren Rand der Dachkante und einem hochgebogenen Rand 22a der Dachauskleidung 22 durch eine dekorative Abdeckbahn 26 abgedeckt. Diese Abdeckbahn 26 hat aber keine mechanische Schutzfunktion und ist so flexibel, daß sie der Entfaltung des Gassacks keinen nennenswerten Widerstand entgegensetzt. Diese Abdeckbahn 26 kann mit dekorativen Elementen versehen, bedruckt, lackiert oder dekorativ strukturiert werden. Die Dachauskleidung 22 kann ferner mit einer elastischen Lippe 22b versehen werden, die den oberen Rand der Abdeckbahn 26 abdeckt, so daß keine Fuge zwischen dem Rand der Dachauskleidung 22 und dem Gassack-Modul in Erscheinung tritt.

Wie in Figur 2 angedeutet ist, treten die Gassack-Module entlang den beiden Seitenrändern der Dachauskleidung 22 augenfällig sichtbar in Erscheinung. Für Reparatur und Ersatz sind die Gassack-Module leicht zugänglich. Auch die Montage der Gassack-Module wird gegenüber herkömmlichen Lösungen wesentlich vereinfacht.

Bei einer weiteren Ausführungsform ist die Umhüllung 16 integraler Bestandteil der Dachauskleidung 22.

## Patentansprüche

1. Insassen-Schutzsystem für ein Fahrzeug, dessen Karosserieaufbau innenseitig durch eine Auskleidung abgedeckt ist, mit wenigstens einem im Ruhezustand zusammengelegten aufblasbaren Gassack und einer die Gassack-Packung zusammenhaltenden Umhüllung, dadurch gekennzeichnet, daß die Auskleidung mit einer Aussparung versehen ist, an deren Berandung die freiliegende oder höchstens durch eine dekorative Abdeckfolie oder Abdeckbahn abgedeckte Umhüllung der Gasack-Packung angeschmiegt ist.

2. Insassen-Schuztsystem nach Anspruch 1, dadurch gekennzeichnet, daß die Umhüllung durch Gestaltungsmerkmale augenfällig von der Auskleidung abgegrenzt ist.

3. Insassen-Schuztsystem nach Anspruch 2, dadurch gekennzeichnet, daß die Umhüllung Träger dekorativer Gestaltungselemente ist.

4. Insassen-Schuztsystem nach einem der Ansprüche 2 bis 3, dadurch gekennzeichnet, daß die Gassack-Packung langgestreckt ausgebildet entlang einer Dachkante des Karosserieaufbaus zwischen dieser und einer Dachauskleidung angeordnet ist.

5. Insassen-Schuztsystem nach Anspruch 4, dadurch gekennzeichnet, daß die Dachauskleidung eine an der Umhüllung der Gassack-Packung anliegende, insbesondere elastische Randlippe aufweist.

6. Insassen-Schuztsystem nach Anspruch 4 oder 5, dadurch gekennzeichnet, daß die Dachauskleidung einen an der Umhüllung der Gassack-Packung anliegenden hochgebogenen Stützrand aufweist.

7. Insassen-Schuztsystem nach einem der Ansprüche 1 bis 6, dadurch gekennzeichnet, daß die Umhüllung der Gassack-Packung ein langgestrecktes Profilteil mit zwei durch einen gekrümmten Boden verbundenen Schenkeln aufweist.

8. Insassen-Schutzsystem nach Anspruch 7, dadurch gekennzeichnet, daß innenseitig an dem gekrümmten Boden des Profilteils ein Gasleitungsrohr abgestützt ist.

9. Insassen-Schutzsystem nach einem der vorstehenden Ansprüche, dadurch gekennzeichnet, daß die Umhüllung integraler Bestandteil der Dachauskleidung ist.
